# NEW EUROPEAN PATENT SPECIFICATION

(11) **EP 0 592 043 B2**
(45) Date of publication and mention of the opposition decision: **18.08.2004**
(45) Mention of the grant of the patent: 08.07.1998
(21) Application number: 93202822.8
(22) Date of filing: 04.10.1993
(51) Int. Cl.: A01J 7/00, A01K 13/00, A01J 7/04

(54) **A construction for automatically milking animals**
Einrichtung zum automatischen Melken von Tieren
Construction par la traite automatique d'animaux

(30) Priority: 08.10.1992 NL 9201734
(43) Date of publication of application: 13.04.1994
(73) Proprietor: MAASLAND N.V., 3155 PD Maasland (NL)
(72) Inventor: van den Berg, Karel, NL-2971 BR Bleskensgraaf (NL)
(74) Representative: Corten, Maurice Jean F.M.

(56) References cited:
- EP-A- 0 535 755
- NL-A- 9 002 047

## Description

The invention relates to a construction for automatically milking animals, including a cleaning member for cleaning the teats of an animal.

Such a construction is known from the Netherlands patent application no. 9002047.

In the cleaning member described in said patent application, the teats of the animal to be milked are cleaned by means of two cleaning rollers which rotate in opposite directions. A teat is moved between the cleaning rollers, which are provided at their outer circumference with profiles, and is cleaned by the frictional motion of the rollers. Dirt deposited on the teat might remain on the cleaning members. By means of a washing machine it is possible to wash the cleaning member before a next animal is cleaned by the cleaning member.

The invention has for its object to provide an improvement of the construction of the type described in the above paragraph.

To that end, the construction is characterized by the features of claim 1.

Consequently, checking the cleaning member is effected in one movement, without requiring extra time, during the moving to the teats.

For a better understanding of the invention and to show how the same may be carried into effect, reference will now be made, by way of example, to the accompanying drawings, in which:
Figure 1 is a side view of the construction in accordance with the invention;
Figure 2 is a plan view of the construction shown in figure 1, in which the cleaning member has been moved to under an animal standing in the milking parlour;
Figure 3 is a more detailed view of the cleaning member of Figures 1 and 2, and also of a sensor, by means of which it can be ascertained whether the cleaning member has been contaminated, and
Figure 4 is a side view of the sensor and the cleaning member, taken in the direction of the arrow IV in Figure 3.

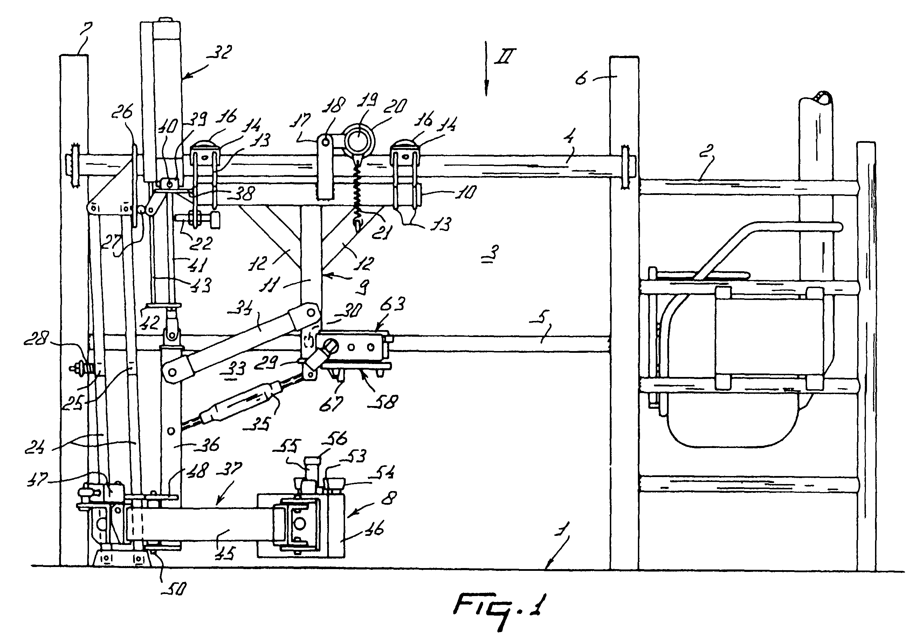

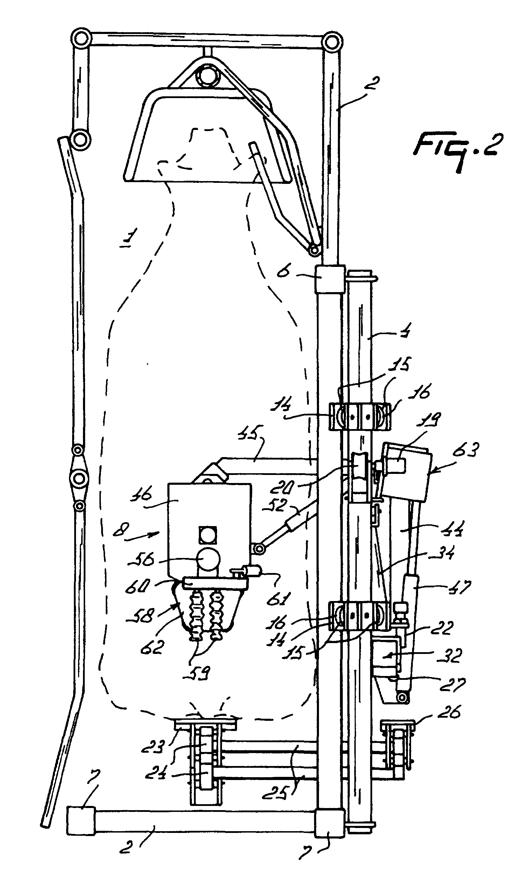

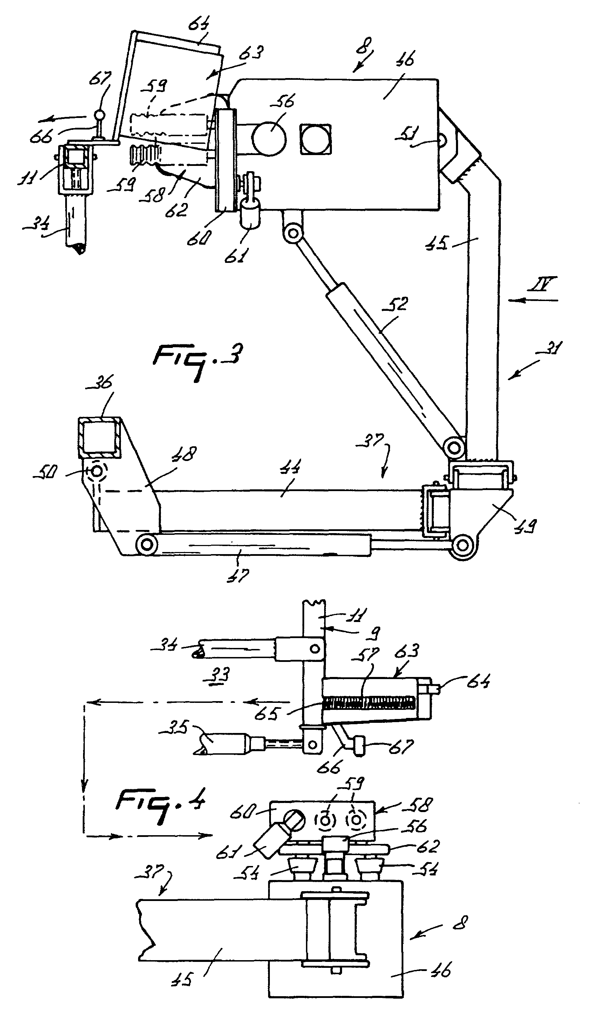

The construction as illustrated in Figures 1 and 2 comprises a milking parlour 1 which is surrounded by a railing 2, which offers the animal a limited freedom of movement. The animal can enter the milking parlour from the side at the rear, whilst the animal can leave the milking parlour again from this side at the front. Since the front side of the milking parlour is provided with a feeding apparatus, the cow will advance sufficiently far to arrive in a position in which it can be easily milked. At the longitudinal side of the milking parlour other than the one in which the entrance and exit are present, there is arranged a rigid frame 3 which forms part of the railing 2, which frame 3 comprises a first frame portion 4 and a second frame portion 5. The first frame portion 4 extends parallel to and is predominantly located above the second frame portion 5. The arrangement is such that the first frame portion 4 is rigidly connected to the exterior side of two uprights 6 and 7 which form part of the railing 2, whereas the second frame portion 5 is rigidly connected between these two uprights 6 and 7. Movably connected to the first frame portion 4 there is a milking robot 8 for automatically milking animals, while this milking robot bears on the second frame portion 5, which otherwise is arranged at such a height that arms of the milking robot 8 can be moved underneath this frame portion to under the cow standing in the milking parlour. The milking robot 8 includes a carrier frame 9 for the further parts of the milking robot. By designing the upper frame portion 4 as a rail, the carrier frame 9 and consequently the entire milking robot can easily be moved along this frame portion. The carrier frame 9 includes a beam 10 which runs predominantly parallel to the first frame portion 4, a perpendicular vertically downwardly directed beam 11 connected rigidly thereto and two struts 12. Pairs of supporting elements 13 are present near the ends of the beam 10. Connected at an angle of approximately 45° to each pair of supporting elements 13 with the aid of supporting plates 14 connected rigidly thereto, there are two rollers 16 which form a roller element pair 15, the construction being such that the carrier frame 9 is suspended in such a manner from the upper frame portion 4 that it is easily movable there-along. Two carriers 17 are disposed on either side on the beam 10 of the carrier frame 9. A motor 19 is connected to these carriers capable of pivoting about a pivot shaft 18. This motor 19 drives a roller 20 which preferably has a rubber surface, which roller is pushed by means of a spring member 21 against the upper frame portion 4. Since the spring member 21 acts between the motor 19 and the carrier frame 9, the roller 20 driven by the motor 19 is kept in the position in which it is pushed against the upper frame portion 4, so that, when the motor is driven, it is moved along the upper frame portion 4 and in conjunction therewith the entire carrier frame 9. Attached to that supporting element 13 that, relative to the milking parlour, is the rearmost supporting element there is a sensor 22 which comprises, for example, a laser. Using this sensor 22, it is possible to drive the milking robot from a rest position in the longitudinal direction of the milking parlour to a starting position, in which the arms of the milking robot are moved to under the animal present in the milking parlour, and to track the movements of the animal in the longitudinal direction of the milking parlour. To that end, the sensor 22 co-operates with a supporting element 23 which is movable against the hind side of the animal. By means of a rod system, which in the present embodiment is constituted by a four-bar linkage system, more specifically a parallelogram construction 24, this supporting element 23 is positioned on the milking parlour floor in such a manner that it is pivotal thereto. With the aid of two rods 25, the supporting element 23 is fitted with a plate 26 which extends sidewardly beyond the frame portions 4 and 5 and is in such a position that it can reflect a signal transmitted by the sensor 22. After the signal reflected by the sensor 22 has been received, the sensor supplies a control signal which is a measure of the actual, i.e. the measured, distance between the plate 26 and the sensor 22, by means of which control signal the motor 19 can be controlled, whilst the milking robot 8 is driven in such a manner in the longitudinal direction of the milking parlour that the distance between the plate 26 and the sensor 22 is brought to or maintained at, respectively, a preset value. When the milking robot 8 is in the rest position, this means that it has been moved to a position which is as far as possible to the rear relative to the frame portions 4 and 5, the milking robot 8 then pressing by means of a contact element 27 against the plate 26 and thus keeping the supporting element 23 in a position in which it is pushed as far to the rear as possible. Put differently, the supporting element 23 is locked by the milking robot 8 when the latter is in a rest position. When the milking robot is driven from this rest position in the longitudinal direction of the milking parlour to the starting position, in which the arms of the robot are moved to under the animal in the milking parlour, then the supporting element 23 is unlocked and is pushed by means of a spring arranged between the parallelogram construction 24 and the railing 2, to the hind side of the cow then present in the milking parlour. When the cow moves forwards or backwards, then the supporting element 23 will continue to be pushed against the hind side of the animal under pressure of the spring 28, so that the position of the plate 26 is the determining factor for the position of the animal in the milking parlour in the longitudinal direction and so that by means of the sensor 22, whilst keeping the distance in the longitudinal direction between the plate 26 and the sensor 22 constant, the milking robot can track the motions of the cow in the longitudinal direction of the milking parlour. In the present embodiment, the beam 11 of the carrier frame 9 extends vertically downwardly to just below the second frame portion 5. At the bottom side of this beam 11 there is a horizontally, rearwardly extending strip 29, on which a freely pivotal roller element 30 is applied. The lower frame portion 5 is constituted by a rail and more in particular by a rail designed as a U-shaped beam, whilst the freely pivotal roller element 30 is arranged such that it is movable between the two upright edges of the U-shaped beam. Thus, the milking robot 8 bears on the lower frame portion 5 and, when the milking robot 8 is moved by means of the motor along the first frame portion 4, can easily move along the second frame portion 5. In addition to the carrier frame 9, the milking robot includes a robot arm construction 31 which by means of an operating cylinder 32 is movable in a predominantly vertical direction relative to the carrier frame 9. The robot arm construction 31 is movably connected to the carrier frame 9 by means of a four-bar linkage system 33. In the embodiment shown, the upper arm 34 of this four-bar linkage system 33 has a fixed length, whereas the lower arm 35 of this four-bar linkage system has an adjustable length, so that the orientation of the robot arm construction 31 can be readjusted to a limited extent. The robot arm construction 31 includes a predominantly vertical robot arm 36, as well as robot arms 37 which are movable in a predominantly horizontal plane. The robot arm 36 is connected by the four-bar linkage system 33 to the beam 11 of the carrier frame 9. The operating cylinder 32 acts between the carrier frame 9 and the robot arm 36. Since the orientation of the robot arm 36 is adjustable to some extent with the aid of the lower arm 35 of the four-bar linkage system 33, the position in which the operating cylinder 32 acts on the robot arm 36 is spatially not accurately defined. For this reason, the housing of the operating cylinder 32 is connected in such a manner to a carrier plate 38 connected to the beam 10 of the carrier frame 9 that it is pivotal to at least a limited extent. Arranged on this carrier plate 38 there are supports 39, between which the housing of the operating cylinder 32 can pivot about a pivot shaft 40. In the present embodiment, the operating cylinder is a servo-pneumatic positioning cylinder. This means that secured to the lower end of a piston rod 41 by means of a plate 42 connected rigidly thereto there is a positioning feedback rod 43, with the aid of which a signal is derived in the portion of the operating cylinder by means of a potentiometer, which signal indicates the position of the piston rod relative to the housing of the cylinder, while with the aid of this signal supplied by said potentiometer the position of the piston rod 41 relative to the housing of the cylinder can be readjusted to a preset position. The operating cylinder 32 is further provided with an overload protection, whereby, as soon as the animal standing in the milking parlour exercises pressure on the robot arm construction 31, for example by kicking it with her leg, the robot arm construction 31 can be moved to its lowest position. In Figure 3, the milking robot 8 is moved rearwardly relative to the frame portions 4 and 5.

As is shown in Figure 3, the milking robot includes arms 44, 45 and 46. The arms 44 and 45 are disposed at a fixed angle of 90° relative to each other. The arms 44 and 45 are consequently moved in conjunction, more specifically by an operating cylinder 47 arranged between a supporting plate 48 secured to the robot arm 36 and a connection member 49 arranged between the two arms 44 and 45. The two arms 44 and 45 are pivotal about a predominantly vertical pivot shaft 50 between the supporting plate 48 and a supporting plate 48', the latter also being rigidly connected to the robot arm 36, more in particular to the lower end thereof. With respect to the arm 45, the arm 46 is pivotal about a predominantly vertical pivot shaft 51 and is pivoted relative to this shaft 51 by means of an operating cylinder 52, which is arranged between the arm 46 and that end of the arm 45 that is located near the connection member 49. Teat cups 53 and 54 (see Figure 1), which are connectable to the teats of the cow, are located near the end of the arm 46. Provided between the two teat cups 54 there is a slide which is movable along the arm 46 and on which a sensor 55 is located, which sensor by a sector-by-sector scanning motion can accurately determine the position of the teats, so that by means of a computer the operating cylinders 32, 47 and 52 can be controlled such that the teat cups can adequately be connected to the teats. After the robot arms 44 - 46 have been moved to under the cow, these arms are in a relatively low position, in which the sensor 55 will not yet detect teats. Using the operating cylinder 32, the robot arms 44 - 46 are now moved upwardly step-by-step until the sensor 55 detects one or more teats of the animal. Should during this upward motion the robot arms 44 - 46 have arrived in such a high position that the upper edge of the sensor 55 is pressed against the cow's abdomen, then by means of a switch 56 provided at the upper half of the sensor 55 the robot arms can be lowered again, whereafter the positional determination of the teats by means of the sensor 55 can be repeated by gradually raising the robot arms.

The construction such as it is described in the foregoing, is moreover equipped, as is shown in Figures 3 and 4, with a cleaning member 58 for cleaning the teats of a milch animal. The cleaning member 58 comprises two profiled rollers 59 which are arranged in a side-by-side relationship and whose shafts are rotatably supported in a gear box 60. The profiled rollers 59 are driven by an electric motor 61 attached to one side of the gear box 60. The cleaning member 58 is further rigidly connected to a carrier plane 62.

If it is recommendable to clean the teats of the animal to be milked, the carrier plane 62 is sucked by means of the teat cups 54 to the arm 45 of the milking robot 8 (Figures 3 and 4). Thereafter, using the sensor 55, the position of the teats of the milch animal is determined, to provide that the rollers 59 can be moved to one or more teats. After positioning of the rollers 59, the teats are gripped between the two profiled rollers which rotate in opposite directions, whereby the friction between rollers 59 and the teats ensures that dirt is removed from the teats.

After cleaning of the teats and optionally rinsing of the teat cups 54, the carrier plane 62 is uncoupled from the robot arm 45. The carrier plane 62 is then stored in a box-like housing 63 which is provided with (non-shown) cleaning means for cleaning the cleaning member 58. The box-like housing 63 is attached to the beam 11 of the carrier frame 9 by means of a Z-shaped tubular profile strip 64 (Figure 3).

A downwardly extending strip 66 is attached near the carrier frame 9 to the Z-shaped tubular profile strip 64. The free end of the strip 66 includes a sensor 67, with the aid of which it can be ascertained whether the cleaning member 58 has been contaminated. The sensor 67 is of a type that responds to reflection differences caused by differences in the level of contamination of the cleaning member 58. In this situation, the sensor 67 operates in the wavelength range of visible light or infrared radiation. Moreover, the beam width of the radiation emitted by the sensor 67 is less than the diameter of one of the rollers 59.

The box-like housing 63 is provided with a slot 65 in two contiguous sides. The slot 65 is covered by a row of brush hairs 57. The width of the slot 65 has been chosen such that it exceeds the diameter of the profiled rollers 59. In this manner, it is possible to place the profiled rollers 59 in the box-like housing 63 with the aid of the robot arm 37. To enable placing of the rollers 59 in the box-like housing 63, the rollers 59 must be brought in the region of and in front of the slot 65 by means of the arm 45. By moving the arm 45 in a horizontal plane towards the slot 65, the rollers 59 are thereafter accommodated in the box-like housing 63. The gear box 60 and the carrier plane 62 stay outside the box-like housing 63. After the rollers 59 have been placed in the box-like housing 63, the lower pressure in the teat cups 54 is removed causing the robot arm 45 to be uncoupled from the carrier plane 62.

For the purpose of cleaning the profiled rollers 59, the box-like housing 63 is provided with spray elements, by means of which a deaning solution is sprayed against the profiled rollers 59.

The mode of operation of the sensor 67 is as follows.

If cleaning of the teats of an animal to be milked is . recommendable, then the robot 8 takes the cleaning member 58 from the box-like housing 63. The profiled rollers 59 are thereby moved in a horizontal plane, until the rollers 59 are outside the box-like housing 63. Thereafter the robot 8 moves the rollers 59 vertically downwardly, until the rollers 59 are moved to a position in which their upper side is located at some distance from a horizontal plane through the sensor 67. Thereafter the rollers 59 are again moved in a horizontal plane, towards the box-like housing 63, more particularly in such a manner that, when the robot arm construction 31 is pivoted about the pivot shaft 50, the upper side of a roller 59 is moved to under the sensor 67. During this pivotal motion about the pivotal shaft 50, it can be determined with the aid of the sensor 67 whether the roller 59 has been contaminated. If it is found that the contamination of the roller 59 has exceeded a predetermined threshold value, then the cleaning member 58 is retracted into the box-like housing 63 to be subjected there to a cleansing operation, before being put into action for cleaning the teats. Using the cleaning agent contained in the box-like housing 63, a cleaning solution is spread during a predetermined period of time under high pressure against the rollers 59.

It will be obvious that also after the teats have been cleaned the rollers 59 can be moved underneath the sensor 67, with the object of ascertaining any contamination of the rollers 59.

## Claims

1. A construction for automatically milking animals, including a cleaning member (58) for cleaning the teats of an animal, **characterized in that** a sensor (67) is present for detecting contamination of the upper surface of a roller (59) of the cleaning member (58), while as soon as the sensor (67) has detected that the contamination of the cleaning member (58) has exceeded a predetermined limit, the cleaning member (58) is subjected to a cleansing operation, before being put into action for cleaning the teats, the sensor (67) being positioned near the path of one of the rollers (59), which is passed underneath the sensor (67) when the cleaning member (58) is moved from a rest position to an active position, or vice versa,
the sensor (67) being of a type that responds to reflection differences caused by differences in the level of contamination of the cleaning member (58).

2. A construction as claimed in claim 1, **characterized in that** the sensor (67) operates in the wavelength range of visible light or infrared radiation.

3. A construction as claimed in any one of the preceding claims, **characterized in that** the beam width of the radiation emitted by the sensor (67) is less than the diameter of one of the roller (59).

4. A construction as claimed in any one of the preceding claims, **characterized in that** cleaning means for cleaning the cleaning member (58) are present.

## Patentansprüche

1. Vorrichtung zum automatischen Melken von Tieren mit einer Reinigungseinheit (58) zum Reinigen der Zitzen eines Tieres,
**dadurch gekennzeichnet, daß** ein Sensor (67) zum Ermitteln der Verschmutzung der Oberfläche einer Walze (59) der Reinigungseinheit (58) vorhanden ist, wobei die Reinigungseinheit (58) vor dem Einsatz zum Reinigen der Zitzen einem Reinigungsvorgang unterzogen wird, sobald der Sensor (67) festgestellt hat, daß die Verschmutzung der Reinigungseinheit (58) einen vorgegebenen Wert überschritten hat, wobei der Sensor (67) nahe dem Bewegungsweg einer der Walzen (59) angeordnet ist, die unter dem Sensor (67) hindurchbewegt wird, wenn die Reinigungseinheit (58) aus einer Ruhelage in eine Arbeitslage oder umgekehrt bewegt wird, wobei der Sensor (67) auf Unterschiede in der Reflexion anspricht, die auf Unterschiede im Verschmutzungsgrad der Reinigungseinheit (58) zurückzuführen sind.

2. Vorrichtung nach Anspruch 1,
**dadurch gekennzeichnet, daß** der Sensor (67) im Bereich der Wellenlänge von sichtbarem Licht oder von InfrarotStrahlung arbeitet.

3. Vorrichtung nach einem der vorhergehenden Ansprüche,
**dadurch gekennzeichnet, daß** die Strahlbreite der von dem Sensor (67) ausgesandten Strahlung kleiner ist als die Abmessung einer der Walzen (59).

4. Vorrichtung nach einem der vorhergehenden Ansprüche,
**dadurch gekennzeichnet, daß** eine Reinigungsvorrichtung zum Reinigen der Reinigungseinheit (58) vorhanden ist.

## Revendications

1. Construction pour la traite automatique d'animaux, comportant un organe de nettoyage (58) pour nettoyer les trayons d'un animal, **caractérisée en ce qu'**un capteur (67) est présent pour détecter la contamination de la surface d'un rouleau (59) de l'organe de nettoyage (58), tandis que, dès que le capteur (67) a détecté que la contamination de l'organe de nettoyage (58) a dépassé une limite prédéterminée, l'organe de nettoyage (58) est soumis à une opération de nettoyage avant d'être mis en action pour nettoyer les trayons, le capteur (67) étant positionné près du trajet du rouleau (59), qui est déplacé au-dessous du capteur (67), lorsque l'organe de nettoyage (58) est entraîné à partir d'une position de repos jusqu'en une position active, ou vice versa, le capteur (67) étant d'un type qui répond à des différences de réflexion provoquées par des différences dans le niveau de contamination de l'organe de nettoyage (58).

2. Construction selon la revendication 1, **caractérisée en ce que** le capteur (67) fonctionne dans la gamme de longueurs d'ondes de la lumière visible ou du rayonnement infrarouge.

3. Construction selon l'une quelconque des revendications précédentes, **caractérisée en ce que** la largeur du faisceau de rayonnement émis par le capteur (67) est inférieure au diamètre de l'un de ces rouleaux (58).

4. Construction selon l'une quelconque des revendications précédentes, **caractérisée en ce que** des moyens de nettoyage pour nettoyer l'organe de nettoyage (58) sont présents.
